# EUROPÄISCHE PATENTSCHRIFT

(11) **EP 3 137 320 B1**
(45) Veröffentlichungstag und Bekanntmachung des Hinweises auf die Patenterteilung: **31.10.2018**
(21) Anmeldenummer: 15719693.2
(22) Anmeldetag: 28.04.2015
(51) Int. Cl.: B60G 13/00, B60G 15/06, B60G 17/04, B60G 17/08, F16F 9/06, F16F 9/54, F16F 13/10, F16F 13/08

(54) **SCHWINGUNGSDÄMPFER EINES FAHRZEUG-RADS**
VIBRATION DAMPER OF A VEHICLE WHEEL
AMORTISSEUR DE VIBRATIONS POUR ROUE DE VÉHICULE

(30) Priorität: 29.04.2014 DE 102014208083
(43) Veröffentlichungstag der Anmeldung: 08.03.2017
(73) Patentinhaber: Bayerische Motoren Werke Aktiengesellschaft, 80809 München (DE)
(72) Erfinder: SCHMIDT, Roland, 82131 Stockdorf (DE)
(86) Internationale Anmeldenummer: PCT/EP2015/059223
(87) Internationale Veröffentlichungsnummer: WO 2015/165910

(56) Entgegenhaltungen:
- DE-A1- 3 409 154
- DE-A1- 19 629 959
- DE-A1-102010 007 237
- FR-A1- 2 471 873
- FR-A5- 2 136 785
- US-A- 4 234 172
- US-A- 4 345 661
- US-A- 4 773 635

## Beschreibung

Die Erfindung betrifft einen hydraulischen Schwingungsdämpfer eines Fahrzeug-Rads, der über ein Dämpferlager mit einem gummielastischen Körper am Fahrzeug-Aufbau gelagert ist und einen fluidgefüllten Zylinder sowie einen in diesem geführten Kolben mit einer Kolbenstange aufweist, und wobei im Dämpferlager eine hydraulische Druckkammer ausgebildet ist, die mit einer im Dämpfer-Zylinder auf der dem Dämpferlager abgewandten Seite des Dämpfer-Kolbens gebildeten ersten Dämpfer-Kammer über eine ein Drosselventil aufweisende fluidleitende Verbindung verbunden ist, nach dem Oberbegriff des Anspruchs 1, und geht von der FR 2 471 873 A1 als nächstkommendem Stand der Technik aus; als weiterer Stand der Technik sei neben der DE 196 29 959 A1 die DE 10 2010 007 237 A1 genannt.

Die an einem Fahrzeug zwischen dessen Rädern und dem über sog. Tragfedern auf diesen Rädern in Vertikalrichtung abgestützten Fahrzeug-Aufbau vorgesehenen Schwingungsdämpfer dienen bekanntlich beim Einfedern und Ausfedern des jeweiligen Rades (d.h. wenn sich dieses im wesentlichen in Vertikalrichtung gegenüber dem Aufbau bewegt) zum Dämpfen dieser (zum Aufbau hin gerichteten) EinfederBewegung bzw. (vom Aufbau weg gerichteten) Ausfeder-Bewegung. Üblicherweise umfassen solche hydraulischen Schwingungsdämpfer einen (Dämpfer)-Zylinder, in welchen ein (Dämpfer)-Kolben in Richtung der besagten Ein- und Ausfeder-Bewegung verlagerbar geführt ist. Durch (Vertikal)-Bewegungen des jeweiligen Rades gegenüber dem Fahrzeug-Aufbau bewegt sich der Kolben im Zylinder und verdrängt dabei Hydraulikflüssigkeit, insbesondere ein Öl. Üblicherweise ist die Kolbenstange des Schwingungsdämpfers über ein gummielastisches Dämpferlager mit dem Fahrzeug-Aufbau verbunden, während der Zylinder des Schwingungsdämpfers starr an einem das Rad drehbar tragenden Radträger befestigt ist. In dem besagten Dämpferlager ist dabei das freie Ende der Kolbenstange mit einem hohlzylinderartig ausgebildeten gummielastischen Körper, in dessen Zentrum die Kolbenstange liegt, üblicherweise über eine Befestigungsscheibe fest verbunden, während die Außenseite dieses gummielastischen Körpers am Fzg.-Aufbau abgestützt ist.

Die eingangs genannte DE 196 29 959 A1 zeigt eine Schwingungsdämpfer-Anordnung mit einem Hydrolager, wobei der genannte gummielastische Körper gegen eine hydraulische Druckkammer abgestützt ist, die mit derjenigen Kammer im Zylinder des Dämpfers, deren Volumen sich beim Einfedern des Rades gegenüber dem Fahrzeug-Aufbau verringert, hydraulisch verbunden ist. Damit sollen nicht nur die niederfrequenten Schwingungen der Fahrzeug-Räder im Rahmen von deren sichtbaren Ein- und Ausfeder-Bewegungen bedämpfbar sein, sondern es sollen aufgrund des Hydrolagers mit einem solchen Schwingungsdämpfer auch höherfrequente von der Fahrbahn über die Räder in Richtung des Fzg.-Aufbaus eingeleitete Schwingungen bedämpft werden können, indem beim Einfedern des Rades Hydraulikflüssigkeit aus dem Dämpfer-Zylinder in die Druckkammer des Hydrolagers gefördert wird. Besonders vorteilhaft an diesem bekannten Stand der Technik erscheint jedoch, dass beim Einfedern des Rades das von der Kolbenstange im Schwingungsdämpfer verdrängte Volumen von Hydraulikflüssigkeit von der Kammer im Dämpferlager aufgenommen werden kann. Dadurch kann ein bei Einrohr-Schwingungsdämpfern üblicher Gasdruckspeicher am Boden des Schwingungsdämpfers dort entfallen.

Praktisch gleiches gilt für die zur Bildung des Oberbegriffs des Anspruchs 1 herangezogene FR 2 471 873 A1, wobei das darin gezeigte Federbein mit Schwingungsdämpfer auch noch eine Möglichkeit zur Höhenverstellung des Fahrzeug-Aufbaus aufweist und somit als aktiver Schwingungsdämpfer ausgebildet sein kann. Unabhängig von dieser Höhenverstellbarkeit ist dort in der besagten fluidleitenden Verbindung ein mit der Bezugsziffer 18 gekennzeichnetes und gemeinhin sog. Bodenventil vorgesehen, so wie dies auch bei einem üblichen Einrohrdämpfer mit Gasdruckspeicher im Bodenbereich für das von der Kolbenstange im Schwingungsdämpfer verdrängte Volumen von Hydraulikflüssigkeit vorgesehen ist. Üblicherweise ist jedoch bei aktiven Schwingungsdämpfern mit einer antreibbaren Hydraulikpumpe, mittels derer eine Kraft zwischen dem zugeordneten Rad und dem Fahrzeug-Aufbau eingeleitet und damit der Fzg.-Aufbau bspw. gegenüber dem Rad angehoben werden kann, für das von der Kolbenstange im Schwingungsdämpfer verdrängte Volumen von Hydraulikflüssigkeit ein eigenständiger Druckspeicher vorgesehen, so wie dies auch in der eingangs genannten DE 10 2010 007 237 A1 gezeigt ist.

Ein Problem bei aktiven Dämpfern kann die Verhärtung des genannten gummielastischen Körpers sein, welche daraus resultiert, dass durch die genannte Hydraulikpumpe zusätzliche Kräfte eingebracht werden. Dem kann in gewissem Umfang dadurch entgegengewirkt werden, dass an den gummielastischen Körper die besagte hydraulische Druckkammer angrenzt, welche mit derjenigen Dämpferkammer, deren Volumen sich beim Einfedern des Rades gegenüber dem Fahrzeug-Aufbau verringert, hydraulisch verbunden ist. Im nächstkommenden Stand der Technik ist in der soeben genannten hydraulischen Verbindung eine Art Drosselventil vorgesehen, welche jedoch vorrangig als Rückschlagventil wie ein weiter oben genanntes Bodenventil ausgebildet ist.
In praktischen Versuchen haben sich diese bekannten Lösungen aktiver Dämpfer hinsichtlich Geräuscheintrag in den Fahrzeug-Aufbau und somit hinsichtlich einer wirkungsvollen Bedämpfung auch höherfrequenter Schwingungen, die oberhalb der typischen Aufbau-Schwingungsfrequenz liegen, als unbefriedigend erwiesen.
Mit der vorliegenden Erfindung soll nun für einen Schwingungsdämpfer eines Fzg.-Rades nach dem Oberbegriff des Anspruchs 1 aufgezeigt werden, wie die Bedämpfung von höherfrequenten Schwingungen, bspw. im Bereich der Eigenfrequenz des Fzg.-Aufbaus in der Umgebung des Dämpferlagers, verbessert dargestellt werden kann (= Aufgabe vorliegenden Erfindung).
Die Lösung der Aufgabe erfolgt durch die kennzeichnenden Merkmale des Anspruchs 1. Die Unteransprüche haben vorteilhafte Ausgestaltungen der Erfindung zum Gegenstand.

Erfindungsgemäß ist in der fluidleitenden Verbindung zwischen der hydraulischen Druckkammer des Dämpferlagers und der sich beim Einfedern des Rades verkleinernden Kammer im Dämpfer-Zylinder, welche analog dem bekannten Stand der Technik in Form eines Kanals durch die Kolbenstange verlaufen kann, aber ausdrücklich nicht durch diese hindurch verlaufen muss, zumindest ein Drosselventil angeordnet, dessen Drosselwirkung abhängig von Randbedingungen veränderlich ist. Hierfür weist dieses Drosselventil einen Ventilkörper auf, der in Abhängigkeit von Randbedingungen verlagerbar ist und durch den hindurch eine Drosselbohrung verläuft, durch welche jedenfalls theoretisch auch dann eine gewisse geringe Menge von Hydraulikflüssigkeit zwischen der Druckkammer des Dämpferlagers und der genannten Kammer des Dämpfer-Zylinders strömen kann, wenn der Ventilkörper auf einem bzw. seinem Ventilsitz aufsitzt. Solange hingegen dieser innerhalb eines Ventilgehäuses verlagerbare und ohne Einwirkung einer hydraulischen Kraft durch zumindest ein Federelement in einer bestimmen Position gehaltene Ventilkörper von einem bzw. seinem Ventilsitz beabstandet (d.h. abgehoben) ist, kann stets eine größere Menge von Hydraulikmedium dieses Drosselventil passieren, d.h. in der besagten fluidleitenden Verbindung strömen. Damit - nämlich abhängig davon, ob der Ventilkörper auf seinem Ventilsitz aufsitzt oder von diesem abgehoben ist - ist die auf höherfrequente Schwingungen zwischen dem jeweiligen Rad und dem Fahrzeug-Aufbau wirkende Dämpfung im Dämpferlager beeinflussbar.

Was den Begriff "höherfrequent" bzw. die Dämpfung "höherfrequenter Schwingungen" betrifft, so ist der gummielastische Körper des Dämpferlagers, über den bspw. die Kolbenstange des Schwingungsdämpfers am Fzg.-Aufbau abgestützt bzw. gelagert ist, dahingehend ausgelegt, dass damit höherfrequente oder hochfrequente Anregungen oberhalb von 10 Hz bis 15 Hz (der Bereich dieser hochfrequenten Anregungen kann dabei bis zu mehreren tausend Hertz reichen) bedämpft werden können. Hingegen wird wie üblich die Schwingungs-Dämpfung zwischen dem jeweiligen Fzg.-Rad und dem Fzg.-Aufbau im (unterhalb dieses zahlenmäßig angegebenen Frequenzbereichs liegenden) niederfrequenten Bereich vom eigentlichen Schwingungsdämpfer, nämlich von der Einheit aus Dämpfer-Zylinder und Dämpfer-Kolben übernommen. Bei einem erfindungsgemäßen Schwingungsdämpfer sind somit zwei Dämpfersysteme in Reihe geschaltet. Zum einen ist im niederfrequenten Bereich (kleiner 10 Hz - 15 Hz) die übliche Dämpfung über den im Dämpfer-Zylinder geführten Kolben vorgesehen, während für den höherfrequenten Bereich die Dämpfung über den besagten elastischen Körper im Dämpferlager erfolgt und dabei vorzugsweise keine Relativbewegung zwischen dem Dämpfer-Kolben und dem Dämpfer-Zylinder stattfindet. Und in diesem höherfrequenten Bereich kann dann der besagte elastische Körper durch den in der hydraulischen Druckkammer des Dämpferlagers herrschenden bzw. in diese über die fluidleitende Verbindung übertragenen Druck entlastet werden. Ohne eine solche Entlastung würde sich nämlich der gummielastische Körper stark verformen und als Folge dessen würde er aufgrund seiner Werkstoffeigenschaften verhärteten, was aber die gewünschte höherfrequente Schwingungsentkopplung zur Karosserie verschlechtern würde. Dabei ist das Ausmaß dieser Stabilisierung bzw. Entlastung des besagten elastischen Körpers und damit auch die höherfrequente Dämpfung selbst von der Position des verlagerbaren Ventilkörpers des erfindungsgemäßen Drosselventils (in der besagten fluidleitenden Verbindung) abhängig.

Durch ein erfindungsgemäßes Drosselventil sowie durch geeignete Gestaltung des Querschnitts der in dessen Ventilkörper vorgesehenen Drosselbohrung (auch in Relation zum Querschnitt der fluidleitenden Verbindung selbst) ist die Dämpfungseigenschaft im erfindungsgemäß gestalteten Dämpferlager nämlich frequenzselektiv gestaltet. Ist die fluidleitende Verbindung eng oder gedrosselt, so stellt sich bei niedrigen Frequenzen ein vollständiger Druckausgleich zwischen der besagten (über die fluidleitende Verbindung mit der Druckkammer des Dämpferlagers verbundenen) Dämpfer-Kammer im Dämpfer-Zylinder und der Druckkammer im Dämpferlager ein. Bei hohen Frequenzen hingegen kann die Hydrauliksäule in der fluidleitenden Verbindung aufgrund ihrer Trägheit nicht mehr folgen und es stellt sich folglich ein Differenzdruck zwischen der Druckkammer des Dämpferlagers der besagten Dämpfer-Kammer ein. Dies kann zur gezielten Auslegung der Dämpfungseigenschaften im Dämpferlager auf bestimmte, insbesondere höhere Frequenzen (gemäß der Erläuterung weiter oben) genutzt werden. Dadurch dass nämlich im höherfrequenten Bereich kein vollständiger Druckausgleich erfolgt, kann gezielt eine Verformung des gummielastischen Elements erzwungen werden, um dessen Dämpfungseigenschaften zu nutzen.

Erfindungsgemäß ist ein sog. aktiver Schwingungsdämpfer, dessen im Dämpfer-Zylinder vorgesehene Dämpfer-Kammern über eine (vorzugsweise elektromotorisch) angetriebene Hydraulikpumpe miteinander verbunden sind, in vorstehend beschriebener Weise gestaltet bzw. am Fahrzeug-Aufbau gelagert, wobei analog dem üblichen Stand der Technik ein eigenständiger hydraulischer Druckspeicher insbesondere für diejenige Hydraulik-Flüssigkeits-Menge vorgesehen ist, welche in der Druckstufe des Schwingungsdämpfers durch die Kolbenstange innerhalb des Dämpfer-Zylinders bzw. aus dessen sich beim Einfedern des Rades vergrößernder Dämpfer-Kammer quasi verdrängt wird. Aufgrund des erfindungsgemäß vorgesehenen und sich frequenzabhängig unterschiedlich verhaltenden Dämpferventils kann diese verdrängte Flüssigkeits-Menge nämlich nicht sicher der Druckkammer des Dämpferlagers zugeführt bzw. in der Dämpfer-Zugstufe wieder aus dieser abgeführt werden.

Mit aktiven Schwingungsdämpfern ist bspw. an einem zweispurigen zweiachsigen Fahrzeug eine Wankstabilisierung (des Fzg.-Aufbaus bei schneller Kurvenfahrt des Fahrzeugs) darstellbar. Während nämlich an einem solchen Fahrzeug mit einfachen nicht aktiven Schwingungsdämpfern das bei stationärer Kreisfahrt auftretende Wankmoment nur über die Tragfedern und einen üblicherweise vorgesehenen Querstabilisator abgestützt wird und dabei im Dämpferlager annähernd keine Kräfte auftreten, kann mittels eines aktiven Schwingungsdämpfers das Wanken des Fzg.-Aufbaus verhindert oder begrenzt werden, indem über die Kolbenstange des Schwingungsdämpfers eine Kraft auf Dämpferlager und damit auf den Fzg.-Aufbau eingebracht wird. Diese Kraft jedoch würde ohne die erfindungsgemäße hydraulische Druckkammer im Dämpferlager ein Verspannen und damit ein Verhärten des besagten im Dämpferlager vorgesehenen elastischen Körpers bewirken, was eine eigentlich durch diesen elastischen Körper zu leistende schwingungstechnische Entkopplung zwischen dem eigentlichen Schwingungsdämpfer (bzw. dem Rad) und dem Fahrzeug-Aufbau behindern würde.

Im Rahmen der vorliegenden Erfindung wurde also festgestellt, dass bei aktiven Schwingungsdämpfern als Folge relativ hoher Stellkräfte (bspw. für eine Wankstabilisierung) ein Verspannen im elastischen Körper eines üblichen (einfachen) Dämpferlagers ohne hydraulische Druckkammer auftreten kann, wodurch dieser elastische Körper, über den wie eingangs geschildert vorzugsweise die Kolbenstange des Schwingungsdämpfers am Fzg.-Aufbau gelagert ist, verhärtet. Da dies im Hinblick auf die Übertragung von höherfrequenten Schwingungen in den Fzg.-Aufbau unerwünscht ist, sollte ein solches Verhärten aufgrund Überlastung des besagten elastischen Körpers vermieden werden, was durch eine besagte hydraulische Druckkammer, über welche der eigentliche Schwingungsdämpfer (und in der bevorzugten Anordnung mit unten liegendem Dämpfer-Zylinder dessen Kolbenstange) zusätzlich - und dabei den besagten elastischen Körper entlastend - am Fahrzeug-Aufbau abgestützt ist, erzielbar ist. Indem dabei das Ausmaß der Wirksamkeit dieser hydraulischen Druckkammer eines erfindungsgemäßen Dämpferlagers mittels des erfindungsgemäß vorgeschlagenen Drosselventils frequenzabhängig veränderbar ist, kann ein erfindungsgemäßer Schwingungsdämpfer einfach und ideal an die jeweilige Einbausituation, d.h. an den vorhandenen Fahrzeug-Aufbau sowie an die vorhandene Rad-Aufhängung (und die durch diese Elemente vorgegebene Empfindlichkeit bezüglich höherfrequenter Schwingungen) angepasst werden.

Im übrigen ist dadurch, dass die sich beim Einfedern des Rades (gegenüber dem Fzg.-Aufbau) verkleinernde Dämpfer-Kammer mit der im Dämpferlager vorgesehenen hydraulischen Druckkammer verbunden ist, sichergestellt, dass beim Einfedern des Rades und somit bei Kompressionen der besagten Dämpfer-Kammer Hydraulikflüssigkeit in die besagte Druckkammer gefördert wird. Dadurch wird insbesondere beim Einfedern der elastische Körper stabilisiert bzw. entlastet.

Das erfindungsgemäß in der fluidleitenden Verbindung zwischen einer Dämpfer-Kammer und der hydraulischen Druckkammer des Dämpferlagers vorgesehene Drosselventil kann als sog. Zugstufendrosselventil ausgebildet sein und somit insbesondere in der sog. Zugstufe des Schwingungsdämpfers (während derer das Rad ausfedert, d.h. sich vom Fzg.-Aufbau quasi entfernt) drosselnd wirksam sein. Der Ventilkörper eines solchen Zugstufen-Drosselventils hebt dann in der sog. Druckstufe des Schwingungsdämpfers - wenn das Rad einfedert - gegen die Kraft eines Federelementes, welches den Ventilkörpert ohne Einwirkung anderer Kräfte an dessen Ventilsitz andrückt, vom Ventilsitz ab und wirkt dann praktisch nicht mehr drosselnd.

Alternativ kann das erfindungsgemäß vorgesehene Drosselventil als sog. Zug- und Druckstufendrosselventil ausgebildet sein und somit sowohl in der Zugstufe des Schwingungsdämpfers als auch in der Druckstufe drosselnd wirksam sein, wobei als Besonderheit durch Verwendung zweier Ventilkörper mit unterschiedlich dimensionierten Drosselbohrungen die Möglichkeit besteht, für die Zugstufe und die Druckstufe des Schwingungsdämpfer eine unterschiedliche Drosselwirkung und damit ein zumindest geringfügig unterschiedliches Dämpfungsverhalten bezüglich höherer Schwingungsfrequenzen darzustellen. Die beiden Ventilkörper können dabei in einem Ventilgehäuse gelagert oder geführt sein, welches ausreichend groß ist, um auch dann für kurze Zeit diejenige Menge von Hydraulikmedium aufzunehmen, welche den von seinem Ventilsitz abgehobenen Ventilkörper passiert, während der jeweils andere Ventilkörper federbelastet auf seinem Ventilsitz aufsitzt. Im Detail wird dies später noch anhand eines schematisch dargestellten Ausführungsbeispiels beschrieben.

Alternativ kann das erfindungsgemäß vorgesehene Drosselventil als sog. amplitudenselektives Drosselventil ausgebildet sein, wobei der innerhalb eines Ventilgehäuses vorzugsweise in Zugstufen-Richtung und in Druckstufen-Richtung verlagerbare Ventilkörper ohne Einwirkung einer Hydraulikkraft zwischen zwei einander gegenüberliegenden Ventilsitzen im von diesen abgehobenen Zustand gehalten ist. Mit einer solchen Ausbildung kann die Drosselwirkung des erfindungsgemäßen Drosselventils von der Größe der Amplituden der Verlagerung des Dämpfer-Kolbens im Dämpfer-Zylinder des erfindungsgemäßen Schwingungsdämpfers abhängig gemacht werden. Bei kleineren Schwingungsamplituden des dem (jeweiligen) Schwingungsdämpfer zugeordneten Fzg.-Rades gegenüber dem Fzg.-Aufbau bleibt dieser Ventilkörper von seinen beiden Ventilsitzen beabstandet und wirkt daher kaum drosselnd, während bei größeren Rad-Hüben, d.h. Verlagerungswegen des jeweiligen Fzg.-Rades gegenüber dem Fzg.-Aufbau der Ventilkörper gegen einen der Ventilsitze gedrückt wird und danach stark drosselnd wirkt.

Die hydraulische Druckkammer des erfindungsgemäßen Dämpferlagers weist in einer senkrecht zur Kolbenstange des Schwingungsdämpfers liegenden Ebene betrachtet eine hydraulisch wirksame erste Fläche auf. Der Dämpfer-Kolben des erfindungsgemäßen Schwingungsdämpfers weist bezüglich derjenigen Dämpfer-Kammer, die mit der Druckkammer des Dämpferlagers über die fluidleitende Verbindung hydraulisch verbunden ist, in einer senkrecht zur Kolbenstange des Schwingungsdämpfers liegenden Ebene betrachtet eine hydraulisch wirksame zweite Fläche auf. Die Größe der genannten erste Fläche beträgt vorzugsweise ca. 80 Prozent bis 120 Prozent der Größe der genannten zweiten Fläche. Durch diese annähernde Gleichheit der beiden Flächen stellt sich ein Kräftegleichgewicht ein, sodass der elastische Körper annähernd spannungsfrei ist, wodurch die (bereits mehrfach erwähnte) Gefahr einer Verhärtung desselben weitestgehend vermieden wird. Insbesondere bei einer bereits genannten Ausbildung des Schwingungsdämpfers als aktiver Schwingungsdämpfer ist dies von Vorteil, da so der elastische Körper in der Lage ist, sich auch bei großen Dämpferstellkräften elastisch zu verformen. Eine gewisse Abweichung, bspw. in der Größenordnung von 20 Prozent von einer "absoluten" Flächengleichheit kann für das sog. Ansprechen des Schwingungsdämpfers von Vorteil sein. Bekanntlich besteht insbesondere bei Einrohrdämpfern durch den hohen Innendruck ein erschwertes "Losbrechen" der Kolbenstange an der Kolbenstangendichtung. Durch eine gewisse Flächenungleichheit der ersten und zweiten Fläche wird bei einer Druckschwankung im Dämpfer-Zylinder die Kolbenstange vom Dämpferlager ausgehend aktiv in Bewegung versetzt. Das "Losbrechen" der Kolbenstange erfolgt also bereits vor einer möglichen Ein- oder Ausfeder-bewegung des jeweiligen Rades. Beim Ein- und Ausfedern muss also nicht mehr zunächst die Haftreibung der Kolbenstangendichtung überwunden werden, sondern es startet die Ein- oder Ausfederbewegung sozusagen bereits in der Gleitreibung.

Es kann im Dämpferlager zusätzlich zum elastischen Körper eine Hydraulikdämpfung integriert sein. Eine solche dem Fachmann grundsätzlich bekannte Hydraulikdämpfung umfasst einen fluidgefüllten ersten Arbeitsraum im elastischen Körper sowie einen zweiten Arbeitsraum innerhalb des Dämpferlagers außerhalb des elastischen Körpers und zumindest eine Drossel zwischen diesen beiden Arbeitsräumen. Die beiden Arbeitsräume sind vorteilhafterweise als ringförmige Räume konzentrisch um die Kolbenstange angeordnet. Dementsprechend wird als Drossel vorteilhafterweise eine ringförmige Scheibe mit geeigneten Löchern (die ggf. zusätzlich mit Ventilplatten versehen sein können) vorgeschlagen. Vorgesehen sein kann dabei auch ein gasgefüllter Ausgleichsraum. Zwischen dem Ausgleichsraum und dem zweiten Arbeitsraum befindet sich eine Membran. Wenn sich dann aufgrund einer Ein- oder Ausfederwegung des Rades die Kolbenstange bewegt, so wird auch der elastische Körper in Bewegung gesetzt. Dadurch wird Hydraulikflüssigkeit zwischen den beiden Arbeitsräumen durch die Drossel hindurch bewegt, wodurch sich eine (zur Wirkung des gummielastischen Körpers) zusätzliche Dämpfung einstellt.

Wie bereits ausgeführt wurde ist ein erfindungsgemäßer Schwingungsdämpfer vorteilhafterweise als aktiver Schwingungsdämpfer ausgebildet. Hierzu umfasst der Dämpfer eine zwischen die beiden Dämpfer-Kammern geschaltete Hydraulikpumpe, die durch eine elektrische Maschine antreibbar ist. Damit kann also gezielt Hydraulikflüssigkeit von einer Kammer des Schwingungsdämpfers in die andere Dämpfer-Kammer des Dämpfer-Zylinders gefördert und als Folge dessen der Fzg.-Aufbau gegenüber dem jeweiligen Rad gezielt angehoben oder abgesenkt werden. Dadurch ist beispielsweise ein Ausgleich von Hub- und Wankbewegungen des Fahrzeuges möglich. Dabei kann - wie grundsätzlich bekannt - die mit der Hydraulikpumpe antriebsmäßig verbundene elektrische Maschine auch als Generator verwendet werden, so dass bei einer durch die Fahrt des Fahrzeugs auf einer Fahrbahn verursachten Aus- oder Einfederbewegung des Rades elektrische Energie gewonnen werden kann, wobei gleichzeitig die gewünschte Dämpfung der Ein- oder Ausfeder-bewegung des Fzg.-Rades gegenüber dem Fzg.-Aufbau erfolgt. Dabei ist jedoch zu beachten, dass aufgrund der Trägheit der Hydraulikpumpe und der elektrischen Maschine die eine wirkungsvolle Dämpfungs-Regelung auf relativ niedrige Frequenzen begrenzt ist, d.h. dass damit praktisch nur im Frequenzbereich der sichtbaren Vertikal-Schwingungen des Rades gegenüber dem Fzg.-Aufbau, d.h. im Fachjargon im Bereich der niederfrequenten Aufbau-Frequenzen eine wirkungsvolle Dämpfung dieser Schwingungsbewegung erzielbar ist. Im Bereich der Schwingungs-Eigenfrequenz des Fzg.-Aufbaus und somit im Bereich der weiter oben genannten höherfrequenten Schwingungen, welche im Fachjargon als Rad-Frequenzen bezeichnet werden, ist damit jedoch keine wirkungsvolle Dämpfung erzielbar und auch die durch den bzw. einen einfachen gummielastischen Körper im Dämpferlager erzielbare Dämpfung ist nicht ausreichend, so dass einfacher aktiver Schwingungsdämpfer mit einfachem üblichen Dämpferlager deutliche - insbesondere akustische - Schwächen zeigt, die dem Fahrer des damit ausgerüsteten Fahrzeugs ein unkomfortables Fahrgefühl vermitteln. Diese Schwächen lassen sich mit einem erfindungsgemäßen Schwingungsdämpfer mit einer hydraulischen Druckkammer im Dämpferlager und geeignet abgestimmten Drosselventil vermeiden.

Weitere Einzelheiten, Merkmale und Vorteile der Erfindung ergeben sich aus der nachfolgenden Beschreibung und den Figuren. Es zeigen:
- Figur 1: eine schematische Ansicht eines aktiven Schwingungsdämpfers mit einem erfindungsgemäßem Dämpferlager
- Figur 2: eine Schnittansicht einer möglichen Ausführungsform des Dämpferlagers eines erfindungsgemäßen Schwingungsdämpfers, wobei vom vorstehend erläuterten Drosselventil lediglich das dieses umgebende Ventilgehäuse sichtbar ist,
- Figuren 3 bis 5: drei mögliche Ausführungsformen eines erfindungsgemäßen Drosselventils im Dämpferlager eines erfindungsgemäßen Schwingungsdämpfers in einer Darstellung analog Fig.2.

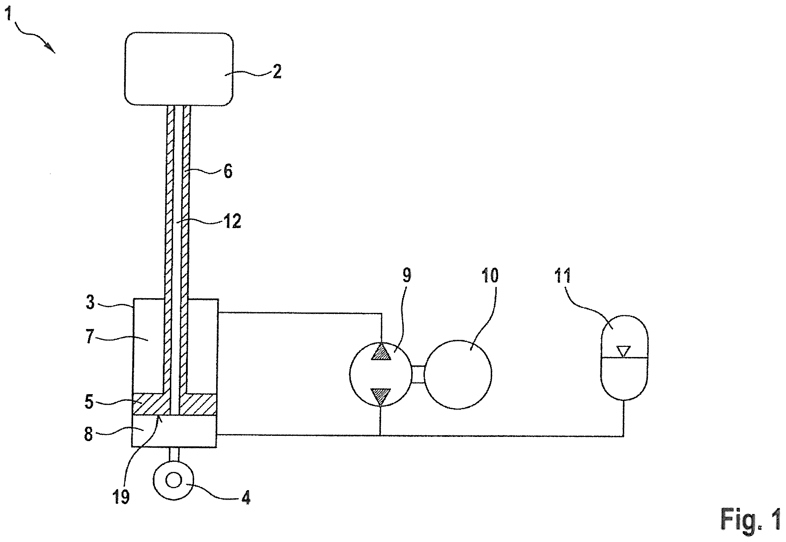

Im Folgenden wird ein Ausführungsbeispiel eines erfindungsgemäßen Schwingungsdämpfers 1 für ein Fahrzeug anhand der Figuren 1 bis 5 im Detail beschrieben.

Figur 1 zeigt schematisch stark vereinfacht den Schwingungsdämpfer 1 mit einem Dämpferlager 2. Das Dämpferlager 2 ist an einer figürlich nicht dargestellten Karosserie eines Fahrzeuges, d.h. am Fahrzeug-Aufbau befestigt. Das Dämpferlager 2 ist weiterhin verbunden mit einer Kolbenstange 6 des Schwingungsdämpfers 1. Die Kolbenstange 6 ist mit einem Dämpfer-Kolben 5 fest verbunden. Der Dämpfer-Kolben 5 ist in einem mit Hydraulikflüssigkeit befüllten Dämpfer-Zylinder 3 linear beweglich geführt. Der Dämpfer-Zylinder 3 wird gemeinhin auch als Dämpferrohr des Schwingungsdämpfers 1 bezeichnet. Der Dämpfer-Zylinder 3 ist üblicherweise und auch hier mit der Anbindung 4 radseitig angeordnet und ist hierfür beispielsweise mit einem Radträger oder einem radführenden Lenker des jeweiligen Fahrzeug-Rads verbunden. Der Dämpfer-Kolben 5 unterteilt den Dämpfer-Zylinder 3 in eine erste Dämpfer-Kammer 7 hier oberhalb des Kolbens 5 und eine zweite DämpferKammer 8 hier unterhalb des Kolbens 5. Beim Ein- und Ausfedern des Rades bewegt sich der Kolben 5 gegenüber dem Dämpfer-Zylinder 3, wobei sich in der sog. Druckstufe des Schwingungsdämpfers 1, wenn das Rad zum Fzg.-Aufbau hin einfedert, die zweite Dämpfer-Kammer 8 verkleinert, während sich in der sog. Zugstufe des Schwingungsdämpfers 1, wenn das Fzg.-Rad vom Fzg.-Aufbau weg ausfedert, die erste Dämpfer-Kammer 7 verkleinert.

Figur 1 zeigt des Weiteren eine Hydraulikpumpe 9, die von einer elektrischen Maschine 10 angetrieben werden kann und die hydraulisch mit den beiden Dämpfer-Kammern 7, 8 verbunden bzw. wirkverbunden ist. Es handelt sich hier somit um ein aktives Dämpfersystem bzw. einen aktiven Schwingungsdämpfer, da mittels der Hydraulikpumpe 9 der Dämpfer-Kolben 5 gegenüber dem Dämpfer-Zylinder 3 verstellbar bzw. verlagerbar ist. Durch eine solche aktive hydraulische Verstellung des Dämpfer-Kolbens 5 kann beispielsweise Wankbewegungen des Fahrzeug-Aufbaus entgegen gewirkt werden. In diesem Fall wirken der Dämpfer-Kolben 5 und der Dämpfer-Zylinder 3 und somit der Schwingungsdämpfer 1 als Kraft stellender Hydraulikzylinder. Des Weiteren zeigt Figur 1 einen an den Hydraulikkreislauf der beiden Dämpfer-Zylinder 7, 8 und der Hydraulikpumpe 9 angeschlossenen hydraulischen Druckspeicher 11. In diesem Druckspeicher 11 kann insbesondere diejenige Hydraulik-Flüssigkeits-Menge gespeichert werden, welche in der Druckstufe des Schwingungsdämpfers 1 durch die Kolbenstange 6 innerhalb des Dämpfer-Zylinders 3 (bzw. in dessen Dämpfer-Kammer 7) quasi verdrängt wird. Bei Ausbildung des Schwingungsdämpfers als Zweirohrdämpfer kann dieser Druckspeicher 11 bzw. dessen Funktion auch in die dann wie üblich "doppelte" Wand des Dämpferrohrs 3 integriert sein.

Die Einheit aus hydraulischer Pumpe 9 und elektrischer Maschine 10 kann auch generatorisch zur Erzeugung elektrischer Energie verwendet werden, wenn - wie üblich - der Dämpfer-Kolben 5 im Fahrbetrieb des Fahrzeugs beim Ein- oder Ausfedern des Rades durch fahrdynamische Einflüsse bzw. durch Einflüsse der Fahrbahn auf den Fahrzeug-Aufbau gegenüber dem Dämpfer-Zylinder 3 (vertikal) verlagert wird. Dabei erfolgt die Dämpfung dieser in begrenztem Umfang schwingenden Ein- und Ausfederbewegung praktisch nur über den generatorischen Betrieb der dann von der Hydraulikpumpe 9 angetriebenen elektrischen Maschine 10, weshalb - anders als bei üblichen passiven Schwingungsdämpfern - im Dämpfer-Kolben 5 keine gedrosselten Durchtrittsöffnungen für Hydraulikflüssigkeit vorgesehen sind.

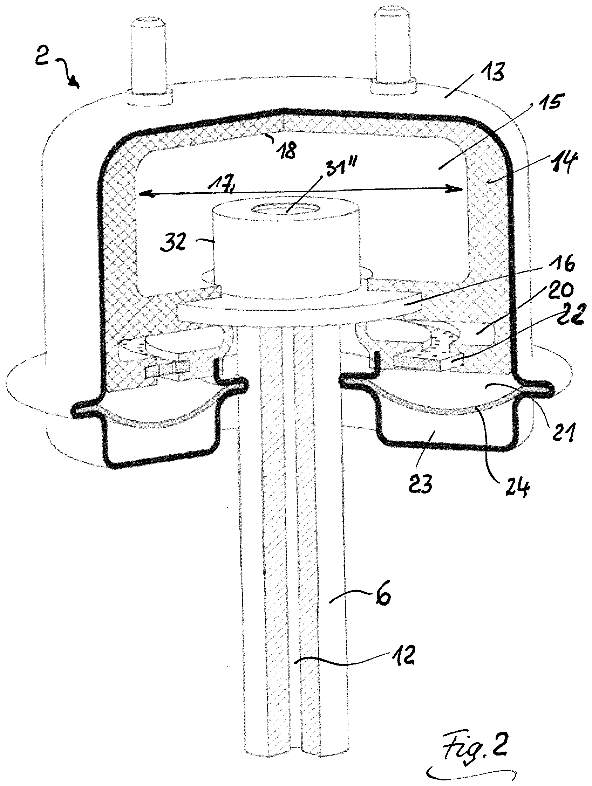

Wie Figur 1 zeigt, ist in der Kolbenstange 6 eine fluidleitende Verbindung 12 ausgebildet. Diese fluidleitende Verbindung 12 mündet in die unterhalb des Dämpfer-Kolbens 5 liegende Dämpfer-Kammer 8. Eine mehr ins Detail gehende Ausbildung des Dämpferlagers 2 und die darin vorgesehene obere Mündung der fluidleitenden Verbindung 12 zeigt Figur 2, in welcher jedoch ein erfindungsgemäßes Drosselventil (25, 26, 27) noch abstrahiert, nämlich nur durch dessen Ventilgehäuse 32 dargestellt ist.

Gemäß Figur 2 weist das Dämpferlager 2 ein Gehäuse 13 auf, auf dessen Oberseite nicht näher gekennzeichnete Schraubenbolzen vorgesehen sind, über welche dieses Gehäuse 13 und damit der Schwingungsdämpfer 1 am Aufbau des Fahrzeugs befestigt wird. In diesem Gehäuse 13 befindet sich ein abstrahiert nach Art eines Hohlzylinders ausgebildeter elastischer Körper 14 aus Gummi, vorliegend gummielastischer Körper 14 genannt. Innerhalb dieses gummielastischen Körpers 14 ist ein Hohlraum ausgebildet, der als hydraulische Druckkammer fungiert und daher auch als hydraulische Druckkammer 15 bezeichnet ist. In diese hydraulische Druckkammer 15 mündet die in der Kolbenstange 6 verlaufende fluidleitende Verbindung 12. Mit Ausnahme der fluidleitenden Verbindung 12 ist die Druckkammer 15 fluiddicht innerhalb des elastischen Körpers 14 ausgebildet.

Zur Befestigung der Kolbenstange 6 zentralliegend im gummielastischen Körper 14 befindet sich auf der Kolbenstange 6 eine Befestigungsscheibe 16, die wiederum in den gummielastischen Körper 14 eingebettet ist. Die von der Kolbenstange 6 übertragene Kraft und geringfügige höherfrequent schwingende Bewegungen der Kolbenstange 6 (insbesondere in Vertikalrichtung, d.h. in Längsrichtung der Kolbenstange 6) werden über diese Befestigungsscheibe 16 in den gummielastischen Körper 14 übertragen. Vom gummielastischen Körper 14 wiederrum erfolgt die Übertragung der von der Kolbenstange 6 Kraft eingeleiteten Kraft und zunächst eigentlich auch der höherfrequent schwingenden Bewegungen der Kolbenstange 6 über das Gehäuse 13, an dem der gummielastische Körper 14 abgestützt ist, in den Aufbau des Fahrzeugs. Letzteres, nämlich eine unbedämpfte Übertragung von höherfrequent schwingenden Bewegungen der Kolbenstange 6 in den Fahrzeug-Aufbau ist jedoch unerwünscht, weshalb diese möglichst intensiv bedämpft bzw. gedämpft werden sollten. Diese Dämpfung erfolgt üblicherweise durch den gummielastischen Körper 14 selbst, jedoch ist dessen Fähigkeit zum Dämpfen solcher höherfrequenten Schwingungen stark eingeschränkt, wenn dieser gummielastische Körper 14 mit hoher Kraft beaufschlagt wird.

Um letzteres zu vermeiden, ist vorliegend die fluidleitende Verbindung 12 zwischen der hier unteren Dämpfer-Kammer 8 des Schwingungsdämpfers 1 und der hydraulischen Druckkammer 15 des Dämpferlagers 2 vorgesehen. Dies näher erläuternd zeigt Figur 2 einen Durchmesser 17 der (hier) kreiszylindrischen hydraulischen Druckkammer 15, welcher in einer Ebene gemessen ist, auf der die Kolbenstange 6 senkrecht steht. In einer zu dieser Ebene parallelen Ebene ist (diesem Durchmesser 17 der Druckkammer 15 entsprechend) eine erste hydraulisch aktive Fläche 18 der Druckkammer 15 definiert. Figur 1 zeigt nun in der zweiten Dämpfer-Kammer 8 eine zweite hydraulisch aktive Fläche 19 des (ebenfalls kreiszylindrischen) Kolbens 5.

Die Größe der ersten (hydraulisch aktiven) Fläche 18 beträgt 80 Prozent bis 120 Prozent der Größe der zweiten (hydraulisch aktiven) Fläche 19. Dadurch stellt sich über die fluidleitende Verbindung 12 annähernd ein Kräftegleichgewicht zwischen diesen beiden (hydraulisch aktiven) Flächen 18, 19 ein, sodass der gummielastische Körper 14 im Bereich der Befestigungsscheibe 16 nicht durch die von der Kolbenstange 16 an den Fahrzeug-Aufbau übertragenen Kräfte belastet wird und damit annähernd spannungsfrei ist, sodass dieser gummielastische Körper 14 seine Dämpfungsfunktion bezüglich höherfrequenter schwingender Bewegungen der Kolbenstange 16 (insbesondere in Vertikalrichtung) bestmöglich wahrnehmen kann.

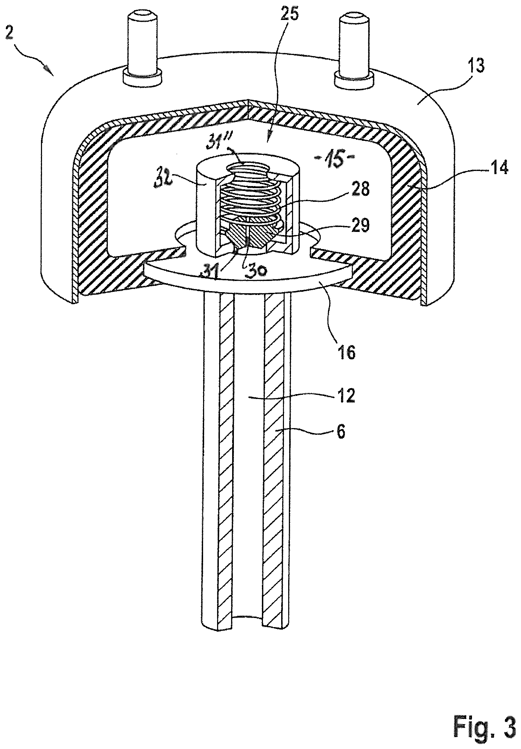

Figur 2 zeigt weiterhin ein in vorteilhafter Weise auf der Befestigungsscheibe 16 angeordnetes Ventilgehäuse 32 mit einem oberen Übertrittsöffnung 31" für Hydraulikmedium, welches von der fluidleitenden Verbindung 12 in der Kolbenstange 6 in den Innenraum des Ventilgehäuses 32 gelangen kann, wie an späterer Stelle noch erläutert wird. Innerhalb dieses Ventilgehäuses 32 ist Drosselventil angeordnet, welches anhand der folgenden Figuren 3 - 5 näher erläutert wird, und welches somit praktisch in der in der fluidleitenden Verbindung 15 vorgesehen ist. Mit einem solchen Drosselventil kann das dämpfende Verhalten des gummielastischen Körpers 14 bzw. die gesamte Charakteristik des Schwingungsdämpfers 1 in bestmöglicher Weise auf das jeweilige Fahrzeug, in dem der erfindungsgemäße Schwingungsdämpfer verbaut ist, abgestimmt werden.

Figur 2 zeigt des Weiteren eine zusätzlich Hydraulikdämpfung, die in das Dämpferlager 2 integriert sein kann bzw. bei diesem Ausführungsbeispiel (anders als bei den Ausführungsformen nach den Figuren 3 - 5) in das Dämpferlager 2 integriert ist. Diese Hydraulikdämpfung umfasst einen ersten Arbeitsraum 20, der im gummielastischen Körper 14 selbst ausgebildet ist, und zwar auf der der hydraulischen Druckkammer 15 abgewandten Seite der Befestigungsscheibe 16. Des Weiteren ist in den gummielastischen Körper 14 eine hier ringförmige Drosselscheibe 22, in der eine Vielzahl von Durchtrittsöffnungen für Hydraulikflüssigkeit vorgesehen ist, eingesetzt. Diese Drosselscheibe 22 trennt den ersten Arbeitsraum 20 von einem zweiten Arbeitsraum 21. Der zweite Arbeitsraum 21 befindet sich außerhalb bzw. unterhalb des gummielastischen Körpers 14 noch innerhalb des Gehäuses 13. Des Weiteren ist im Gehäuse 13 ein gasgefüllter Ausgleichsraum 23 vorgesehen. Der gasgefüllte Ausgleichsraum 23 ist über eine Membran 24 vom zweiten Arbeitsraum 21 getrennt. Wie Figur 2 zeigt sind der erste Arbeitsraum 20, der zweite Arbeitsraum 21, die Drosselscheibe 22, der Ausgleichsraum 23 und die Membran 24 als ringförmige Elemente konzentrisch um die Kolbenstange 6 angeordnet. Wenn nun über die Kolbenstange 6 eine gewisse (schwingende) Bewegung in Längsrichtung der Kolbenstange 6 in den elastischen Körper 14 eingeleitet wird, so tritt durch die Durchtrittsöffnungen der Drosselscheibe 22 Hydraulikflüssigkeit zwischen den beiden Arbeitsräumen 20 und 21 über, wodurch eine zusätzliche Dämpfung solcher hochfrequenter Bewegungen bzw. Schwingungs-Anregungen erfolgt.

Die Figuren 3 bis 5 zeigen drei unterschiedliche Varianten eines in Fig.2 lediglich durch das Ventilgehäuse 32 dargestellten Drosselventils in der fluidleitenden Verbindung 12. Nochmals ausdrücklich erwähnt sei an dieser Stelle, dass die vorstehend erläuterte Hydraulikdämpfung mit der Drosselscheibe 20 rein fakultativ ist und daher in den Figuren 3 - 5 nicht gezeigt bzw. nicht vorhanden ist oder zumindest nicht vorhanden sein muss. Detaillierter beschrieben wird aber anhand dieser Figuren 3 - 5 ein Drosselventil, welches den Strom von Hydraulikmedium zwischen der Dämpfer-Kammer 8 im Dämpfer-Zylinder 3 und der hydraulischen Druckkammer 15 im Dämpferlager 2, der über die fluidleitende Verbindung 12 geführt ist, unterschiedlich zu drosseln in der Lage ist.

Das Ausführungsbeispiel nach Figur 3 zeigt ein sog. Zugstufen-Drosselventil 25, welches in der (grundsätzlich bereits erläuterten) Zugstufe des Schwingungsdämpfers 1 drosselnd wirkt, in der Druckstufe des Schwingungsdämpfers 1 hingegen praktisch nicht drosselt, d.h. dann nahezu kein Strömungshindernis darstellt. Ein innerhalb des Ventilgehäuses 32 in Vertikalrichtung (d.h. in Längsrichtung der Kolbenstange 6) verlagerbarer (und hier von der Innenwand des Ventilgehäuses 32 beabstandeter) Ventilkörper 29 weist zentral eine in Längsrichtung der Kolbenstange 6 verlaufende Drosselbohrung 30 auf, durch die nur eine sehr geringe Menge von Hydraulikflüssigkeit strömen kann. Mittels eines Federelements 28, das an der oben liegende Deckfläche des Ventilgehäuses 32 abgestützt ist, wird dieser Ventilkörper 29 gegen seinen unten liegenden Ventilsitz 31 gedrückt. Bei diesem unten liegenden Ventilsitz 31 handelt es sich vereinfacht dargestellt um eine Durchtrittsöffnung in der Bodenfläche des Ventilgehäuses 32, welche eine Verbindung zwischen der in der Kolbenstange 6 vorgesehenen fluidleitenden Verbindung 12 und dem Innenraum des Ventilgehäuses 32 darstellt. Quasi spiegelbildlich zu diesem Ventilsitz 31 ist in der oberen Deckfläche des Ventilgehäuses 32 eine Übertrittsöffnung für Hydraulikflüssigkeit vom Innenraum des Ventilgehäuses 32 in die hydraulische Druckkammer 15 vorgesehen, welche mit der Bezugsziffer 31" bezeichnet ist. Befindet sich nun der Ventilkörper 29 in seiner figürlich dargestellten Position, in der er auf dem Ventilsitz 31 aufsitzt, kann nur eine sehr geringe Menge von Hydraulikflüssigkeit durch die Drosselbohrung 30 zwischen der fluidleitenden Verbindung 12 in der Kolbenstange 16 und der hydraulischen Druckkammer 15 überströmen. Befindet sich hingegen der Schwingungsdämpfer 1 im Zustand der sog. Druckstufe, so wird aufgrund des dann signifikant höheren Hydraulikdrucks in der unteren Dämpfer-Kammer 8 des Dämpfer-Zylinders 3, welcher durch die fluidleitende Verbindung 12 in der Kolbenstange 6 zum Zugstufen-Drosselventil 25 geleitet wird, dessen Ventilkörper 29 vom Ventilsitz 31 abgehoben und es kann eine signifikant größere Menge von Hydraulikflüssigkeit von der Dämpfer-Kammer 8 in die hydraulische Druckkammer 15 überströmen.

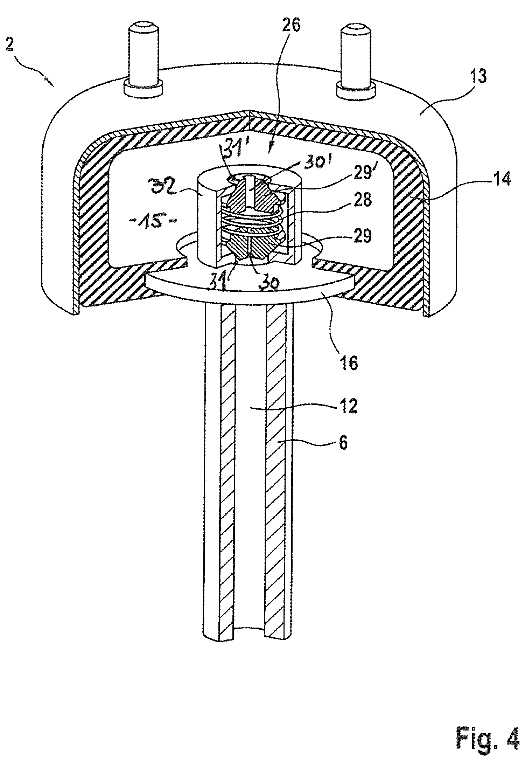

Das Ausführungsbeispiel gemäß Figur 4 zeigt ein Zug- und Druckstufen-Drosselventil 26 im Ventilgehäuse 32. Hier sind in Vertikalrichtung einander diametral gegenüberliegend zwei Ventilkörper 29, 29' vorgesehen, zwischen denen ein Federelement 28 eingespannt ist. Wenn keine zusätzliche Krafteinwirkung (ausgenommen die Schwerkraft) anliegt, drückt dieses Federelement 28 jeden Ventilkörper 29 bzw. 29' gegen seinen jeweiligen Ventilsitz 31 bzw. 31', welche Ventilsitze abermals vereinfacht ausgedrückt nichts anderes sind als Durchtrittsöffnungen (für Hydraulikflüssigkeit) in der unterer Bodenfläche bzw. in der oberen Deckfläche des Ventilgehäuses 32. Wie ersichtlich besitzen die auch in diesen Ventilkörpern 29, 29' zentral vorgesehenen Drosselbohrungen 30, 30' einen unterschiedlichen Querschnitt. In der Druckstufe dieses Schwingungsdämpfers 1 hebt dabei (analog dem zuvor erläuterten Ausführungsbeispiel) der untere Ventilkörper 29 von seinem Ventilsitz 31 ab, während der obere Ventilkörper 29' auf seinem Ventilsitz 31' verbleibt und es wirkt dann die einen größeren Durchtrittsquerschnitt aufweisende Drosselbohrung 31' des oberen Ventilkörpers 29'. Hingegen hebt in der Zugstufe dieses Schwingungsdämpfers 1 der obere Ventilkörper 29' von seinem Ventilsitz 31' ab, während der untere Ventilkörper 29 auf seinem Ventilsitz 31 verbleibt und es wirkt dann die einen kleinere Durchtrittsquerschnitt aufweisende Drosselbohrung 30 des unteren Ventilkörpers 29.

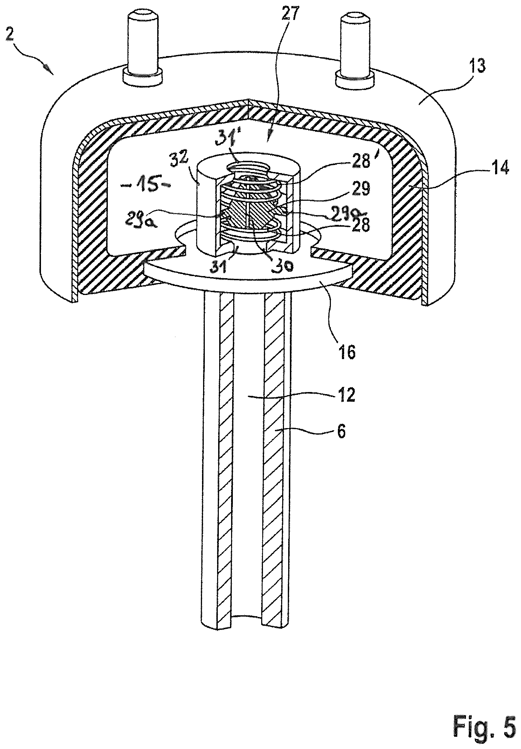

Das Ausführungsbeispiel gemäß Figur 5 zeigt ein sog. amplitudenselektives Drosselventil 27 innerhalb des Ventilgehäuses 32. Hier ist wieder nur ein einziger in Längsrichtung der Kolbenstange 16 verlagerbarer Ventilkörper 29 vorhanden, der durch zwei einander in Verlagerungsrichtung des Ventilkörpers 29 diametral gegenüberliegende Federelemente 28, 28' zwischen den analog Fig.4 vorgesehenen einander gegenüber liegenden Ventilsitzen 31, 31' in der Bodenfläche bzw. in der Deckfläche des Ventilgehäuses 32 gehalten ist, wenn mit Ausnahme der Schwerkraft keine weiteren Kräfte auf diesen Ventilkörper 29, welcher abermals eine zentral verlaufende Drosselbohrung 30 aufweist, einwirken. Abweichend von den zuvor erläuterten Ausführungsbeispielen ist hier der Ventilkörper 29 durch die Zylinderwand des Ventilgehäuses 32 geführt und liegt somit kreisförmig umlaufend mit einer Dichtkante 29a an der zylindrischen Innenwand des Ventilgehäuses 32 an.

In der gezeigten Position des Ventilkörpers 29 von Fig.5 zwischen seinen beiden Ventilsitzen 31, 31' kann zunächst eine gewisse größere Menge von Hydraulikflüssigkeit entweder von der hydraulischen Druckkammer 15 oder von der fluidleitenden Verbindung 12 in der Kolbenstange 6 in den Innenraum des Ventilgehäuses 32 und als Folge von (bereits erläuterten) geringfügigen höherfrequenten Schwingungen der Kolbenstange 16 aus diesem wieder zurück strömen, und zwar solange, bis der Raum zwischen dem jeweiligen Ventilsitz 31 bzw. 31' bzw. der jeweiligen Durchtrittsöffnung und der umlaufenden Dichtkante 29a des Ventilkörpers 29 befüllt ist. Sobald jedoch in der Zugstufe oder Druckstufe des Schwingungsdämpfers 1 signifikant größere Mengen von Hydraulikflüssigkeit in das Ventilgehäuse 32 einströmen, wird der Ventilkörper 29 als Folge hiervon gegen einen seiner Ventilsitze 31 bzw. 31' gedrückt. Konkret wird der Ventilkörper 29 (ähnlich wie beim Ausführungsbeispiel von Fig.4) in der Druckstufe des Schwingungsdämpfers 1 durch eine dann größere Hydraulikflüssigkeitsmenge gegen seinen oberen Ventilsitz 31' gedrückt werden, während er in der Zugstufe des Schwingungsdämpfers 1 durch eine dann größere Hydraulikflüssigkeitsmenge gegen seinen unteren Ventilsitz 31 gedrückt wird. Sobald der Ventilkörper 20 aber auf einem seiner Ventilsitze 31, 31' aufsitzt, kann nur noch eine geringe Menge von Hydraulikflüssigkeit entweder aus der fluidleitenden Verbindung 12 in der Kolbenstange 6 oder aus der hydraulischen Druckkammer 15 durch die Drosselbohrung 30 des Ventilkörpers 29 abgeführt werden. Die Position des Ventilkörpers 29 dieses amplitudenselektiven Drosselventils 27 ist somit quasi von der Amplitude der jeweiligen Schwingungen abhängig, nämlich abhängig davon, ob eine größere oder eine geringere Menge von Hydraulikflüssigkeit in den Innenraum des Ventilgehäuses 32 gelangt.

Für das Verständnis sämtlicher Ausführungsbeispiele muss man sich vor Augen halten, dass neben den niederfrequenten sichtbaren Ein- und Ausfederbewegungen des jeweiligen Rades gegenüber dem Fzg.-Aufbau auch die bereits erläuterten höherfrequenten Schwingungsvorgänge relevant sind, die ebenfalls schwingende Bewegungen der Hydraulikflüssigkeit im Gesamtsystem eines erfindungsgemäßen Schwingungsdämpfers 1 verursachen, bei denen das jeweilige Drosselventil 25 bzw. 26 bzw. 27 wie beschrieben wirkt.

Noch kurz auf das Ausführungsbeispiel gemäß Figur 1 zurückkommend zeigt diese eine Ausbildung des Schwingungsdämpfers 1 als aktiver Dämpfer mit einer bzw. der Hydraulikpumpe 9. Allerdings können die in den Figuren 2 - 5 dargestellten und in den Patentansprüchen beanspruchten verschiedenen Ausführungsformen auch bei einem "einfachen" Schwingungsdämpfer, der keine "aktive" Dämpfung ermöglicht und bei die Hydraulikflüssigkeit nur durch Schwingungsanregungen zwischen der Fahrbahn-Oberfläche und dem Fzg.-Aufbau in Bewegung versetzt wird, verwendet werden. Auch bei nicht aktiven Dämpfern ist nämlich eine vorspannungsfreie elastische Beweglichkeit des elastischen Körpers 14 im Dämpferlager 2 vorteilhaft.

Figürlich nicht dargestellt ist eine für sämtliche Ausführungsbeispiele mögliche Weiterbildung, wonach in der Druckkammer 15 zumindest bereichsweise ein Druckschwingungen dämpfendes Material vorgesehen ist. Damit können möglicherweise in der Druckkammer 15 auftretende (abermals) "höherfrequente" Druckschwingungen der bzw. in der Hydraulikflüssigkeit, welche aus der Dämpfer-Kammer 8 über die fluidleitende Verbindung 12 in die Druckkammer 15 übertragen werden könnten, bedämpft werden, so dass keine Gefahr besteht, dass diese über das Gehäuse 13 des Dämpferlagers 2 in den Fahrzeug-Aufbau eingeleitet werden. Selbstverständlich darf dieses Material die Druckkammer 15 nicht soweit ausfüllen, dass diese ihre oben beschriebene Funktion, ein Kräftegleichgewicht darzustellen, nicht mehr erfüllen kann. Bei diesem Druckschwingungen dämpfenden Material kann es sich bspw. um einen geeigneten Schaumstoff handeln, mit dem bspw. die Wände der Druckkammer 15 ausgekleidet sind, so wie dies in Fig.2 in Form eines Bestandteils des elastischen Körpers 14 dargestellt ist. Alternativ kann jedoch die Druckkammer 15 auch mit elastischen, d.h. kompressiblen Kügelchen befüllt sein, oder es sind andere, dem Fachmann für Schwingungsdämpfung bekannte Maßnahmen umgesetzt.

### Bezugszeichenliste:

- 1: Dämpfer
- 2: Dämpferlager
- 3: Zylinder
- 4: Anbindung zum Rad
- 5: Kolben
- 6: Kolbenstange
- 7: erste Kammer
- 8: zweite Kammer
- 9: Hydraulikpumpe
- 10: elektrische Maschine
- 11: Druckspeicher
- 12: fluidleitende Verbindung
- 13: Gehäuse
- 14: elastischer Körper
- 15: Druckkammer
- 16: Befestigungsscheibe
- 17: Durchmesser
- 18: erste Fläche
- 19: zweite Fläche
- 20: erster Arbeitsraum
- 21: zweiter Arbeitsraum
- 22: Drosselscheibe
- 23: Ausgleichsraum
- 24: Membran
- 25: Zugstufen-Drosselventil
- 26: Zug- und Druckstufen-Drosselventil
- 27: amplitudenselektives Drosselventil
- 28: Federelement
- 29: Ventilkörper
- 30: Drosselbohrung (im Ventilkörper 29)
- 31: Ventilsitz
- 32: Ventilgehäuse

## Patentansprüche

1. Schwingungsdämpfer eines Fahrzeug-Rads, der über ein Dämpferlager (2) mit einem gummielastischen Körper (14) am Fahrzeug-Aufbau gelagert ist und einen fluidgefüllten Zylinder (3) sowie einen in diesem geführten Kolben (5) mit einer Kolbenstange (6) aufweist, beidseitig dessen im Zylinder (3) eine Dämpfer-Kammer (7, 8) gebildet ist und wobei im Dämpferlager (2) eine hydraulische Druckkammer (15) ausgebildet ist, die mit derjenigen Dämpfer-Kammer (8), deren Volumen sich beim Einfedern des Rades gegenüber dem Fahrzeug-Aufbau verringert, über eine ein Drosselventil (25, 26, 27) aufweisende fluidleitende Verbindung (12) verbunden ist,
**dadurch gekennzeichnet, dass** der Schwingungsdämpfer Bestandteil eines aktiven Dämpfersystems ist, in welchem mittels einer elektromotorisch antreibbaren Hydraulikpumpe (9) der Dämpfer-Kolben (5) gegenüber dem Dämpfer-Zylinder (3) verlagerbar ist, um als Kraft stellender Hydraulikzylinder zu wirken, indem die zu beiden Seiten des Dämpfer-Kolbens (5) im Dämpfer-Zylinder (3) gebildeten Dämpfer-Kammern (7, 8) über die antreibbare Hydraulikpumpe hydraulisch miteinander verbunden sind und wobei an diesen Hydraulikkreislauf ein hydraulischer Druckspeicher (11) angeschlossen ist,
und wobei das genannte Drosselventil (25, 26, 27) einen gegen Federkraft gegenüber einem Ventilsitz (31) verlagerbaren und eine Drosselbohrung (30) aufweisenden Ventilkörper (29) besitzt, wobei die Drosselbohrung solchermaßen ausgelegt ist, dass sich bei Schwingungs-Frequenzen zwischen dem Fahrzeug-Rad und dem Fahrzeug-Aufbau im niederfrequenten Bereich von kleiner 10 - 15 Hertz ein vollständiger Druckausgleich zwischen der hydraulischen Druckkammer (15) und der besagten Dämpfer-Kammer (8) einstellt, während höherfrequente oder hochfrequente Schwingungs-Anregungen oberhalb von 10 Hertz bis 15 Hertz bis hin zu mehreren tausend Hertz mittels des gummielastischen Körpers (14) des Dämpferlagers (2) bedämpft werden, wobei sich zu dessen Entlastung ein Differenzdruck zwischen der Druckkammer (15) des Dämpferlagers (2) und der Dämpfer-Kammer (8) einstellt.

2. Schwingungsdämpfer nach Anspruch 1, wobei das Drosselventil (25) als vorrangig in der Schwingungsdämpfer-Zugstufe wirksame Drossel ausgebildet ist, indem dessen Ventilkörper (29) nur in der Schwingungsdämpfer-Druckstufe gegen die Federkraft vom Ventilsitz (31) abheben kann.

3. Schwingungsdämpfer nach Anspruch 1, wobei das Drosselventil (25) durch zwei durch Federkraft gegen ihren Ventilsitz (31, 31') gedrückte Ventilkörper (29, 29') gebildet ist, deren Drosselbohrungen (30, 30') einen unterschiedlichen Querschnitt besitzen.

4. Schwingungsdämpfer nach Anspruch 1, wobei das Drosselventil (25) als amplitudenselektives Drosselventil ausgebildet ist, indem der innerhalb eines Ventilgehäuses (32) vorzugsweise in Zugstufen-Richtung und in Druckstufen-Richtung verlagerbare Ventilkörper (29) ohne Einwirkung einer Hydraulikkraft zwischen zwei einander gegenüberliegenden Ventilsitzen (31, 31') im von diesen abgehobenen Zustand gehalten ist.

5. Schwingungsdämpfer nach einem der vorhergehenden Ansprüche, **gekennzeichnet durch** eine Hydraulikdämpfung im Dämpferlager (2), umfassend einen fluidgefüllten ersten Arbeitsraum (20) im elastischen Körper (14), einen zweiten Arbeitsraum (21) im Dämpferlager (2) außerhalb des elastischen Körpers (14), und zumindest eine Drosselscheibe (22) zwischen den beiden Arbeitsräumen (20, 21).

6. Schwingungsdämpfer nach Anspruch 5, wobei im Dämpferlager (2) ein gasgefüllter Ausgleichsraum (23) ausgebildet und zwischen dem Ausgleichsraum (23) und dem zweiten Arbeitsraum (21) eine Membran (24) vorgesehen ist.

7. Schwingungsdämpfer nach einem der vorhergehenden Ansprüche, wobei die Druckkammer (15) senkrecht zur Kolbenstange (6) eine hydraulisch wirksame erste Fläche (18) aufweist und der Kolben (5) senkrecht zur Kolbenstange (6) eine hydraulisch wirksame zweite Fläche (19) aufweist und wobei die Größe der ersten Fläche (18) 80 Prozent bis 120 Prozent der Größe der zweiten Fläche (19) beträgt.

8. Schwingungsdämpfer nach einem der vorhergehenden Ansprüche, wobei in der Druckkammer (15) zumindest bereichsweise ein Druckschwingungen dämpfendes Material vorgesehen ist.

## Claims

1. A vibration damper of a vehicle wheel, which vibration damper is supported on the vehicle body via a damper mount (2) having a rubber-elastic body (14) and comprises a fluid-filled cylinder (3) and a piston (5) guided therein with a piston rod (6), with a damper chamber (7, 8) formed in the cylinder (3) on either side of said piston, and wherein a hydraulic pressure chamber (15) is formed in the damper mount (2) and is connected via a fluidic connection (12) comprising a throttle valve (25, 26, 27) to that damper chamber (8) of which the volume is reduced when the wheel is deflected relative the vehicle body,
**characterised in that** the vibration damper is part of an active damper system, in which the damper piston (5) can be moved relative to the damper cylinder (3) by means of an electric-motor-driveable hydraulic pump (9) so as to act as a force-regulating hydraulic cylinder **in that** the damper chambers (7, 8) formed in the damper cylinder (3) on both sides of the damper piston (5) are hydraulically connected to one another via the driveable hydraulic pump, and wherein a hydraulic pressure store (11) is connected to this hydraulic circuit,
and wherein the aforesaid throttle valve (25, 26, 27) has a valve body (29), which is movable against spring force relative to a valve seat (31) and comprises a throttle bore (30), wherein the throttle bore is designed such that, in the event of vibration frequencies between the vehicle wheel and the vehicle body in the low-frequency range of less than 10-15 hertz, a complete pressure equalisation is provided between the hydraulic pressure chamber (15) and said damper chamber (8), whereas higher-frequency or high-frequency vibration excitations above 10 hertz to 15 hertz up to several thousand hertz are damped by means of the rubber-elastic body (14) of the damper mount (2), wherein in order to relieve the load thereon a differential pressure is provided between the pressure chamber (15) of the damper mount (2) and the damper chamber (8).

2. A vibration damper according to claim 1, wherein the throttle valve (25) is configured as a throttle effective predominantly in the vibration damper rebound stage in that the valve body (29) thereof can lift off from the valve seat (31) against the spring force only in the vibration damper compression stage.

3. A vibration damper according to claim 1, wherein the throttle valve (25) is formed by two valve bodies (29, 29') pressed by spring force against their valve seat (31, 31'), the throttle bores (30, 30') of said valve bodies having different cross-sections.

4. A vibration damper according to claim 1, wherein the throttle valve (25) is configured as an amplitude-selective throttle valve in that the valve body (29) movable within a valve housing (32) preferably in the rebound-stage direction and in the compression-stage direction is held in the state raised from two mutually opposed valve seats (31, 31') without a hydraulic force acting therebetween.

5. A vibration damper according to any one of the preceding claims, **characterised by** a hydraulic damping in the damper mount (2), comprising a fluid-filled first working space (20) in the elastic body (14), a second working space (21) in the damper mount (2) outside the elastic body (14), and at least one throttle plate (22) between the two working spaces (20, 21).

6. A vibration damper according to claim 5, wherein a gas-filled equalisation space (23) is formed in the damper mount (2) and a diaphragm (24) is provided between the equalisation space (23) and the second working space (21).

7. A vibration damper according to any one of the preceding claims, wherein the pressure chamber (15) comprises a hydraulically effective first area (18) perpendicular to the piston rod (6), and the piston (5) comprises a hydraulically effective second area (19) perpendicular to the piston rod (6), and wherein the size of the first area (18) is 80% to 120% of the size of the second area (19).

8. A vibration damper according to any one of the preceding claims, wherein a material damping pressure fluctuations is provided at least partially in the pressure chamber (15).

## Revendications

1. Amortisseur de vibration de roues de véhicule, monté par l'intermédiaire d'un palier d'amortisseur (2) avec un organe élastique (14) comme du caoutchouc sur le châssis du véhicule et un cylindre (3) rempli de fluide ainsi qu'un piston (5) guidé dans celui-ci ayant une tige de piston (6), en formant de ses deux côtés, dans le cylindre (3), une chambre d'amortissement (7, 8), et
une chambre de pression hydraulique (15) étant réalisée dans le palier d'amortisseur (2) qui est reliée à la chambre d'amortissement (8) dont le volume diminue lors du soulèvement de la roue par rapport au châssis du véhicule, par l'intermédiaire d'une liaison fluidique (12) équipée d'une soupape d'étranglement (25, 26, 27),
amortisseur **caractérisé en ce qu'**
il fait partie d'un système actif d'amortisseur dans lequel une pompe hydraulique (9) entraînée par un moteur électrique déplace le piston d'amortisseur (5) par rapport au cylindre d'amortisseur (3) pour fonctionner comme vérin hydraulique fournissant une force, les chambres d'amortisseur (7,8) formées de deux côtés du piston d'amortisseur (5) dans le cylindre d'amortisseur (3) étant reliées hydrauliquement par la pompe hydraulique motrice, et
- un accumulateur hydraulique (11) étant raccordé à ce circuit hydraulique, et
- la soupape d'étranglement (25, 26, 27) a un corps de soupape (29) mobile par rapport à un siège de soupape (31) contre une force ressort et comportant un perçage d'étranglement (30),
- le perçage d'étranglement (30) étant conçu, pour établir, pour les fréquences d'oscillation entre la roue du véhicule et la carrosserie du véhicule dans la plage des basses fréquences, inférieures à 10-15 hertz, une compensation complète de la pression entre la chambre de pression hydraulique (15) et la dite chambre d'amortissement (8) alors que les excitations de fréquence plus élevée ou les fréquences élevées supérieures à 10 hertz jusqu'à 15 hertz allant jusqu'à plusieurs milliers de hertz, sont amorties par l'organe élastique en caoutchouc (14) du pallier d'amortisseur (2),
- lors de sa décharge, il s'établit une différence pression entre la chambre de pression (15) du palier d'amortisseur (2) et la chambre d'amortisseur (8).

2. Amortisseur de vibration selon la revendication 1,
dans lequel
la soupape d'étranglement (25) est réalisée comme organe d'étranglement agissant prioritairement comme organe d'étranglement dans la phase de traction de l'amortisseur de vibrations, le corps de soupape (29) ne pouvant se soulever du siège de soupape (31) contre la force ressort que dans la phase de pression de l'amortisseur de vibration.

3. Amortisseur de vibration selon la revendication 1,
dans lequel
la soupape d'étranglement (25) est formée de deux corps de soupape (29, 29') poussés contre leur siège de soupape (31, 31') par la force de ressort et dont les perçages d'étranglement (30, 30') ont une section différente.

4. Amortisseur de vibration selon la revendication 1,
dans lequel
la soupape d'étranglement (25) est une soupape d'étranglement à amplitude sélective en ce qu'à l'intérieur du boîtier de soupape (32), le corps de soupape (29) mobile dans la direction de la phase de traction et dans la direction de la phase de compression est tenu sans l'action d'une force hydraulique dans son état soulevé entre deux sièges de soupape (31, 31') qui se font face.

5. Amortisseur de vibration selon l'une des revendications précédentes, **caractérisé par**
un amortissement hydraulique dans le palier d'amortisseur (2) comprenant une première chambre active (20) remplie de fluide dans le corps élastique (14), une seconde chambre active (21) dans le palier d'amortisseur (2) à l'extérieur du corps élastique (14) et au moins un disque d'étranglement (22) entre les chambres actives (20, 21).

6. Amortisseur de vibration selon la revendication 5,
selon lequel
une chambre de compensation (23) remplie de gaz est prévue dans le palier d'amortisseur (2) et une membrane (24) sépare la chambre de compensation (23) et la seconde chambre active (21).

7. Amortisseur de vibration selon l'une des revendications précédentes,
selon lequel
la chambre de pression (15) a une première surface (18) à activité hydraulique, perpendiculaire à la tige de piston (6) et le piston (5) a une seconde surface (19) à activité hydraulique, perpendiculaire à la tige de piston (6), la dimension de la première surface (18) correspondant à 80-120 pour cent de la dimension de la seconde surface (19).

8. Amortisseur de vibration selon l'une des revendications précédentes,
selon lequel
au moins par zone, la chambre de pression (15) comporte une matière amortissant les oscillations de pression.
